# EUROPEAN PATENT SPECIFICATION

(11) **EP 0 997 238 B1**
(45) Date of publication and mention of the grant of the patent: **12.05.2004**
(21) Application number: 99308461.5
(22) Date of filing: 26.10.1999
(51) Int. Cl.: B25J 18/00, B25J 17/02, B23Q 1/54

(54) **Parallel link mechanism**
Parallelstangenmechanismus
Mécanisme d'actionnement à barres parallèles

(30) Priority: 27.10.1998 JP 32142098
(43) Date of publication of application: 03.05.2000
(73) Proprietor: Fanuc Ltd, Minamitsuru-gun, Yamanashi 401-0597 (JP)
(72) Inventor: Nihei, Ryo, Fujiyoshida-shi, Yamanashi, 403-0005 (JP); Uematsu, Masaaki, Koufu-shi, Yamanashi, 400-0851 (JP); Matsumoto, Kuniyasu, Minamitsuru-gun, Yamanashi, 401-0511 (JP); Abe, Kenichiro, Minamitsuru-gun, Yamanashi, 401-0511 (JP)
(74) Representative: Billington, Lawrence Emlyn

(56) References cited:
- US-A- 5 028 180
- US-A- 5 575 597

## Description

The present invention relates to an improvement of a parallel link mechanism.

In parallel link mechanisms, a fixed member and a moving member are coupled to each other by means of a plurality of juxtaposed links, and the links are individually driven to change the position and attitude of the moving member with respect to the fixed member. The links are juxtaposed in the sense of being arranged to operate side-by-side. Thus the links are parallel in the same sense in which electrical components may be in parallel, as opposed to being in series. The links are not necessarily geometrically parallel to one another, and indeed in many cases they are not geometrically parallel to one another. That is, they do not all extend in exactly the same direction as one another.

Such parallel link mechanisms, which are stiffer than serial link mechanisms, have various advantages including ease of high-speed operation of the moving member, high operating accuracy, miniaturization and power-saving design of their drive unit, and simple general construction. Since standardized identical parts can be used in these mechanisms, moreover, the processes of design, manufacture, maintenance, etc. for the mechanisms can be simplified. Thus, parallel link mechanisms are suitably used in working apparatuses in various fields, including varieties of machine tools, handling robots, etc.

In a working apparatus provided with such a parallel link mechanism, machining and handling operations for articles can be carried out with a moving plate fitted with an end effector of a tool, such as a rotating tool, welding gun, or YAG laser, or with a workpiece table.

Structurally, however, parallel link mechanisms are subject to a problem such that changes of the attitude of a moving plate with respect to a fixed plate, especially rotation of the moving plate, is restricted.

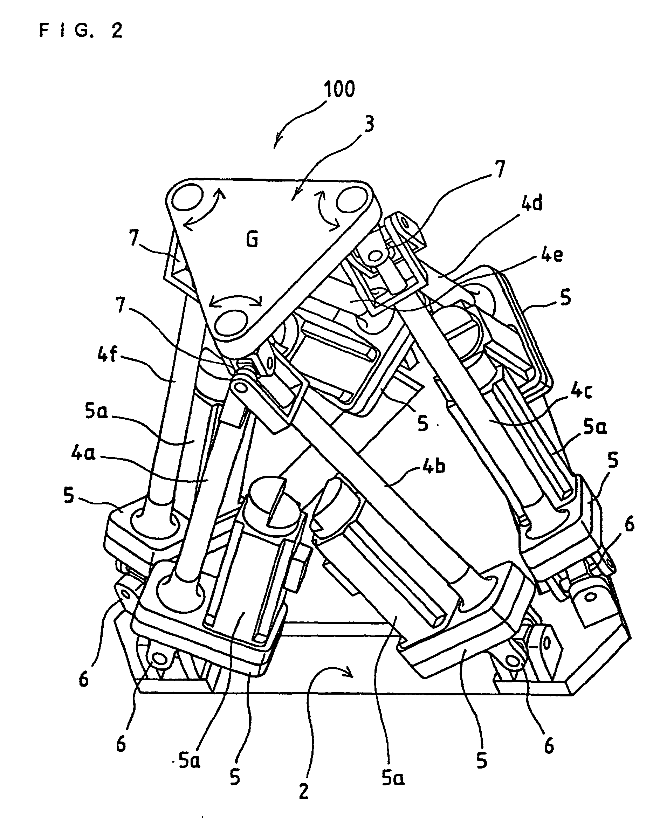

FIG. 2 is a perspective view showing an example of a previously proposed parallel link mechanism 100 that involves the above problem.

The parallel link mechanism 100 comprises a fixed plate 2 for use as a supporting base, a moving plate 3 to be fitted with an end effector, six extendable links 4a to 4f for connecting the plates 2 and 3, drive mechanisms 5 for converting a rotary motion into a linear motion in order to extend or contract the links 4a to 4f, individually, and servomotors 5a as drive sources for the drive mechanisms 5. As can be seen, the links 4a to 4f are not geometrically parallel with one another.

Each of the links 4a to 4f is a direct-acting mechanism that includes a sleeve-shaped ball nut (not shown) and a ball screw therein. The ball screw is rotated by means of its corresponding servomotor 5a as a drive source that is attached to each drive mechanism 5. The rotation of each servomotor 5a causes each drive mechanism 5 to change the substantial length of each of the links 4a to 4f.

In the example shown in FIG. 2, the fixed plate 2 and the moving plate 3 are each formed of a substantially equilateral triangle

A pair of couplings 6 for supporting each of the links 4a to 4f through each drive mechanism 5 are attached to each vertex portion of the triangle of the fixed plate 2. On the other hand, a coupling 7 to be fitted collectively with the respective upper end portions of each of three pairs of links 4a-4b, 4c-4d, and 4e-4f is attached to each vertex portion of the triangle of the moving plate 3.

Each coupling 6 on the fixed plate 2 is formed of a coupling with the degree of freedom of 2, which allows its corresponding one of the links 4a to 4f to rock in all directions with respect to the fixed plate 2.

On the other hand, each coupling 7 on the moving plate 3 is formed of a coupling with the degree of freedom of 3, which allows its corresponding two of the links 4a to 4f to rock in the aforesaid manner with respect to the fixed plate 2. Each coupling 7 itself, which is connected to its corresponding pair of links 4a-4b, 4c-4d, or 4e-4f, can rotate relatively to the moving plate 3. More specifically, each coupling 7 has a unitized coupling structure which can rock around first and second axes that extend parallel to the plane of the moving plate 3 and is mounted for rotation around a third axis that extends at right angles to the plane of the moving plate 3. The upper end portions of each pair of links 4a-4b, 4c-4d, and 4e-4f are jointly attached to the lower end portion of each corresponding coupling structure in a manner such that respective pair of links can rotate with respect to the coupling structure.

In the parallel link mechanism 100 constructed in this manner, the moving plate 3 can be moved toward or away from the fixed plate 2 without changing its attitude relative to the fixed plate 2 by simply synchronously contracting or extending the six links 4a to 4f. On the other hand, the attitude of the moving plate 3 relative to the fixed plate 2 can be changed by extending or contracting each of the three pairs of links 4a-4b, 4c-4d, and 4e-4f in a cooperative manner.

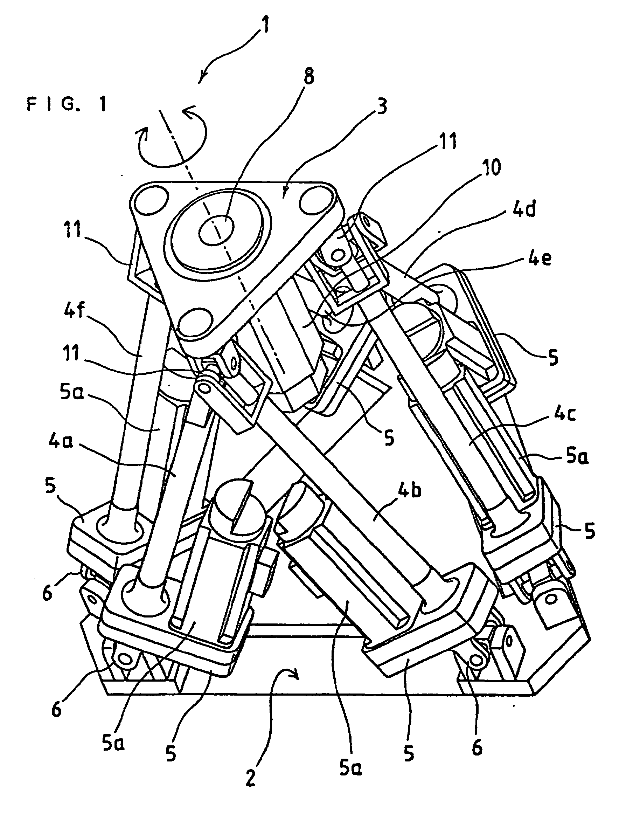

In separating the moving plate 3 from the fixed plate 2 in FIG. 2, for example, the six links 4a to 4f are extended simultaneously. In tilting the moving plate 3 on this side in Fig. 1, moreover, the two pair of links 4c-4d and 4e-4f are extended synchronously, while the remaining pair of links 4a-4b are contracted.

In rotating the moving plate 3 relative to the fixed plate 2, furthermore, for all of the three pairs of links 4a-4b, 4c-4d, and 4e-4f, one link in each pair of links is extended or contracted with respect to the other, synchronously.

If the links 4a, 4c and 4e are extended with respect to the links 4b, 4d and 4f, respectively, for example, the moving plate 3 rocks or rotates in the clockwise direction substantially around its center point G. If the links 4a, 4c and 4e are contracted with respect to the links 4b, 4d and 4f, respectively, on the other hand, the moving plate 3 rocks or rotates in the counterclockwise direction substantially around the center point G.

Each two links 4a and 4b, 4c and 4d, or 4e and 4f constitute two sides of a triangle, individually. Thus, if the links 4a, 4c and 4e are simultaneously extended or contracted to the same degree with respect to the links 4b, 4d and 4f, respectively, the respective shapes of the three triangles are then changed simultaneously. In consequence, the moving plate 3 is urged to rock or rotate in the clockwise or counterclockwise direction substantially around the center point G.

However, the moving plate 3 having the construction shown in FIG. 2 can be rocked or rotated with respect to the fixed plate 2 for about 60° in one direction and about 60° in the opposite direction (for an overall range of 120°) at the most for the following reason. In order to rock or rotate the moving plate 3 with respect to the fixed plate 2, as mentioned before, for all of the three links 4a-4b, 4c-4d, and 4e-4f, one link in each pair of links is extended or contracted with respect to the other, simultaneously, but the extending or contracting action of the links 4a to 4f is restricted within a certain range lest the links interfere with the drive mechanisms 5 (servomotor 5a). In consequence, the range of rocking or rotating motion of the moving plate 3 relative to the fixed plate 2 is limited to a predetermined extent.

In order to solve this problem to ensure satisfactory rotating operation of the end effector, there is proposed a manipulator of a five-axis control type (Japanese Patent Application Laid-open No. 10-29178), in which an arm provided with a rotary drive mechanism is connected to a moving plate so that the degree of freedom of the rotating operation of the end effector can be improved by means of the distal end of the arm. According to this manipulator, the rotary drive mechanism is interposed between the moving plate and the end effector, so that the distance between the moving plate and the effector is long. Therefore, the general stiffness of the manipulator is too low to ensure satisfactory machining or handling accuracy.

Other known parallel link mechanisms are disclosed in US-A-5,575,597 which discloses the pre-characterising features of attached claim 1, and US-A-5,028,180 which discloses another machine tool comprising a parallel link mechanism.

The object of the present invention is to provide a parallel link mechanism avoiding the aforementioned drawbacks of the prior art, good in stiffness, and capable of assuring a satisfactory degree of freedom to the rotation of an end effector.

According to the present invention, there is provided a parallel link mechanism, which has a stationary member and a movable member and is arranged so that the two members are coupled to each other by means of a plurality of juxtaposed links, and these links are individually drivable to change the position and attitude of the movable member with respect to the stationary member, the mechanism further comprising: a mounting unit on which an end effector or a table can be mounted, arranged on the movable member so that the mounting unit can rotate about an axis; and a motor provided on the movable member for controlling the rotational drive and/or the rotational position of the mounting unit relative to the movable member; characterised in that said mounting unit comprises a rotary drive output flange having a mounting hole therein, the flange being rotatably driven by the motor attached to the movable member, and the flange being situated substantially flush with the surface of the movable member.

According to the invention, the movable member of the parallel link mechanism is provided with the substantially flush rotary drive output flange to be fitted with an end effector or table and the drive unit (servomotor or the like) for rotating the mounting unit. The distance between the movable member and the end effector or table can be shortened, with the result that the range of rocking or rotational motion of the end effector or table can be widened without lowering the general stiffness of the mechanism.

### BRIEF DESCRIPTION OF THE DRAWINGS

The foregoing and other features of an embodiment of the invention will become apparent from the following description of a preferred embodiment of the invention with reference to the accompanying drawings, in which:
FIG. 1 is a perspective view showing one embodiment of a parallel link mechanism according to the present invention; and
FIG. 2 is a perspective view showing the previously proposed example of a parallel link mechanism.

One embodiment of a parallel link mechanism according to the present invention will now be described with reference to FIG. 1.

A parallel link mechanism 1 comprises a fixed plate 2 as a stationary member, a moving plate 3 as a movable member, six extendable links 4a to 4f for connecting the plates 2 and 3, drive mechanisms 5 for extending or contracting the links 4a to 4f, individually, and servomotors 5a as drive sources for the drive mechanisms 5. As in FIG. 2, the links 4a to 4f are not geometrically parallel to one another. The link mechanism 1 further comprises: a mounting unit (flange 8) which is arranged on the moving plate 3 and is to be fitted with an end effector such as a tool or table; a speed reducer (not shown) of which an output shaft is formed with the mounting unit; and a drive unit (servomotor 10) for rotating the reducer.

The fixed plate 2, moving plate 3, links 4a to 4f, drive mechanisms 5 for extending or contracting the links, and servomotors 5a are constructed in the same manner as those of the parallel link mechanism 100 previously described with reference to FIG. 2. Therefore, a description of those members is omitted.

The present embodiment has the mounting unit for the end effector or table rotatably arranged on the moving plate 3, and the drive source (servomotor 10) for rotating the mounting unit,and the speed reducer,are fixed to the moving plate 3. Thus, the end effector or table is rotated in a manner such that the mounting unit, on which an end effector or table can be mounted, is rotated by means of the servomotor 10. Accordingly, it is unnecessary to rotate the moving plate 3 itself with respect to the fixed plate 2 in order to turn the end effector or the table.

According to the present embodiment, therefore, couplings with the degree of freedom of 2, not with the degree of freedom of 3 as used in the embodiment shown in FIG. 2, may be used as couplings 11 for attaching the respective upper end portions of the links 4a to 4f.

More specifically, each coupling 11 has a unitized coupling structure which can rock about first and second axes that extend parallel to the plane of the moving plate 3. The coupling structure is fixed directly to the moving plate 3. (In the example shown in FIG. 2, the unitized coupling structure is mounted for rotation about a third axis that extends at right angles to the plane of the moving plate 3.) The upper end portions of each pair of links 4a-4b, 4c-4d, and 4e-4f are jointly attached to the lower end portion of each corresponding coupling structure in a manner such that respective pair of links can rotate with respect to the coupling structure.

In the parallel link mechanism 1 shown in FIG. 1, the moving plate 3 can be moved toward or away from the fixed plate 2 without changing its attitude relative to the fixed plate 2 by simply synchronously contracting or extending the six links 4a to 4f. On the other hand, the attitude of the moving plate 3 relative to the fixed plate 2 can be changed by extending or contracting each of the three pairs of links 4a-4b, 4c-4d, and 4e-4f in a cooperative manner. The moving plate 3 is operated in the same manner as the moving plate 3 of the parallel link mechanism 100 shown in FIG. 2.

The mounting unit on which an end effector or table can be mounted comprises a hole bored through the output flange 8 on the output shaft of the speed reducer and a chuck for holding the shaft portion of a rotating tool, such as a deburring router or drill, located inside the flange 8. The tool is rotated in a manner such that its shaft portion is passed through the output flange 8 and held by means of the chuck.

The servomotor 10 is fixed to the moving plate 3 by means of fixing means such as bolts in a manner such that its axis of rotation is perpendicular to the plane of the plate 3.

A unitized end effector, such as a YAG laser or spot welder, can be attached to the output flange 8 by providing a shaft on the underside of the casing of the laser or welder and holding the shaft in the hole of the flange 8 by means of the chuck. Likewise, a table can be attached to the output flange 8 by providing a shaft on the underside of the table and holding the shaft in the hole of the flange 8 by means of the chuck.

Since the end effector or table that is mounted on the output flange 8 in this manner is rotated by means of the servomotor 10 with the aid of the speed reducer, the range of its rotation is unlimited. When a rotating tool such as a drill is mounted on the flange 8, therefore, it can be continuously rotated in one direction to carry out boring operation. Further, tapping operation or the like that requires forward and reverse rotations of a tool can be securely carried out by freely rotating the tool in either direction by means of the servomotor 10.

If an end effector such as a spot welder is attached to the output flange 8, welding operation for a workpiece with a complicated shape, e.g., spot welding for the wheel house of an automobile, can be carried out with ease. In the case where an article is handled by a workpiece table mounted on the output flange 8, moreover, the article can be treated with high positioning accuracy by the servomotor 10.

The output flange 8, on which an end effector or a table can be mounted, is located substantially flush with the plane of the moving plate 3, so that the distance between the effector and the moving plate 3 can be shortened. Therefore, this embodiment of the present invention can solve the defects of a five-axis controlled manipulator disclosed in the aforementioned Japanese Patent Application Laid-open No. 10-29178 where the degree of freedom of the rotation of the end effector is secured by separately providing the drive mechanism for rotation halfway between the end effector and the moving plate, more specifically, lowering of stiffness attributable to the increase in the distance between the end effector and the moving plate 3 and lowering of machining or handling accuracy due to the lowered stiffness.

If a space is represented by the plane of the fixed plate 2 and the axis perpendicular to the plane of the plate 2 given as an X-Y plane and a Z-axis, respectively, the end effector or table that is mounted on the output flange 8 moves with the degree of freedom of 6 that is based on rotation of the end effector or table around the Z-axis (i.e., rotary motion of the output flange 8 by means of the servomotor 10), in addition to the translations of the end effector or table in the X- and Y-directions, rotations around the X- and Y-axes and translation in the Z-direction (these five movements or five degrees of freedom can be attained by extending or contracting three pairs of links 4a to 4f, as explained above with reference to FIG. 2).

According to the embodiment described above, the degree of freedom of the rotation of an end effector such as a tool or table is improved by rotating only the output flange 8 relative to the moving plate 3. Alternatively, however, it can be increased by directly applying the structure of the drive unit that includes the output flange 8, servomotor 10, etc. shown in FIG. 1 to the parallel link mechanism 100 of FIG. 2 in which the rotation of the moving plate 3 relative to the fixed plate 2 is allowed in some measure.

The rotating operation of the output flange 8 in the parallel link mechanism constructed in this manner is utilized as a degree of redundant freedom that overlaps rotating operation of the moving plate 3 relative to the fixed plate 2. In this case, all the six degrees of freedom for the translations in the directions of the X-, Y-, and Z-axes and the rotations around these axes can be attained in some measure by extending and contracting the six links 4a to 4f (as in the case shown in FIG. 2). However, as rotation of the end effector around the Z-axis can be attained within the range of about ± 60° at most by only extending and contracting the links 4a to 4f, rotation of the output flange 8 by means of the servomotor 10 is added for extending a rotational range of the end effector.

The output flange 8 need not always be located on the central portion of the moving plate 3 as shown in FIG. 1, and may alternatively be situated off or outside the center of the plate 3.

Further, the output flange 8 and the servomotor 10 may be attached to the moving plate 3 in a manner such that their axis of rotation extends parallel to or at a certain angle to the plane of the plate 3.

In this case, the rotating operation of the output flange 8 on which an end effector or table can be mounted can be utilized as a new axis of rotation (i.e., seventh axis) with another degree of freedom that never overlaps the rotation of the moving plate 3 relative to the fixed plate 2. This seventh axis serves further to enlarge the rotatable region for the end effector or table.

Thus, in the case where the attitude of the moving plate 3 relative to the fixed plate 2 is changed by only extending or contracting the links 4a to 4f, the change of the attitude of the plate 3 with respect to the plate 2, that is, the rocking operation of the end effector with the plate 2 given as the X-Y plane, is restricted by such problem as an interference between the links 4a to 4f and drive mechanisms 5 or servomotors 5a.

If the output flange 8 and the servomotor 10 are attached to the moving plate 3 in a manner such that their axis of rotation extends parallel to or at a narrow angle to the plane of the plate 3, however, the end effector or table on the flange 8 is allowed also to rotate freely around an axis that is parallel to the plan (X-Y plane) of the fixed plate 2. In consequence, the rotatable region for the end effector or table is enlarged as a whole.

According to the present embodiment described above, a servomotor is used as the drive unit for rotating the output flange 8 on which an end effector or table can be mounted. Alternatively, however, the drive unit for rotating the end effector may be an ordinary motor not incorporating a feedback system or any of various conventional mechanical elements including rotary cylinder, etc.

According to the present invention, there may be provided a parallel link mechanism that is stiff enough to stand high-accuracy machining and article handling operation, and can freely rotate an end effector or table to cope with varieties of processes of machining and article handling operation that require various changes of attitude.

Whilst in some embodiments of the invention the motor 10 will be able to control the rotational position of the flange 8 with accuracy, for example when a machining table is supported by the flange 8, in other embodiments simple rotational drive will be sufficient, for example when the flange 8 supports a drill. In other embodiments the motor 10 will be sufficiently versatile to control both rotational drive and rotational position.

In a parallel link mechanism as illustrated and described, an output flange 8 as a mounting unit on which an end effector of a tool or a table can be mounted is rotatably arranged on a moving plate 3, and a servomotor 10 for use as a drive unit for rotating the output flange 8 is incorporated in the moving plate 3. Since the output flange 8 on which the end effector can be mounted is located directly on the moving plate 3, the degree of freedom of the rotation of the end effector or table can be improved without causing the stiffness of the parallel link mechanism to lower due to an increase in the distance between the moving plate 3 and the end effector.

## Claims

1. A parallel link mechanism, which has a stationary member (2) and a movable member (3) and is arranged so that the two members (2, 3) are coupled to each other by means of a plurality of juxtaposed links (4a-4f), and these links (4a-4f) are individually drivable to change the position and attitude of the movable member (3) with respect to the stationary member (2), the mechanism further comprising:
a mounting unit on which an end effector or a table can be mounted, arranged on the movable member (3) so that the mounting unit can rotate about an axis; and
a motor (10) provided on the movable member (3) for controlling the rotational drive and/or the rotational position of the mounting unit relative to the movable member (3);
**characterised in that** said mounting unit comprises a rotary-drive output flange (8) having a mounting hole therein, the flange (8) being rotatably driven by the motor (10) attached to the movable member (3), and the flange (8) being situated substantially flush with the surface of the movable member (3).

2. The parallel link mechanism according to claim 1, wherein said flange (8) is provided on an output shaft of a speed reducer which is rotatably driven by said motor (10).

3. The parallel link mechanism according to claim 2, wherein said flange (8) is formed on said output shaft.

4. The parallel link mechanism according to claim 1,2 or 3, wherein said mounting unit (3) further comprises a chuck mechanism arranged in the flange (8).

5. The parallel link mechanism according to claim 4, wherein said chuck mechanism is adapted to hold a shaft provided on the underside of a casing of a tool constituting an end effector, or on the undersurface of a table.

6. The parallel link mechanism according to any one of the preceding claims, wherein there are six of said juxtaposed links (4a-4f).

7. The parallel link mechanism according to any one of the preceding claims, wherein said motor (10) is a servo motor.

## Patentansprüche

1. Parallelgelenk-Mechanismus, der ein stationäres Teil (2) und ein bewegliches Teil (3) hat und derart eingerichtet ist, dass die zwei Teile (2, 3) mittels einer Vielzahl von nebeneinander angeordneten Verbindungsgliedern (4a - 4f) miteinander verbunden sind und diese Verbindungsglieder (4a - 4f) einzeln antreibbar sind, um die Position und die Stellung des beweglichen Teils (3) in bezug auf das stationäre Teil(2) ändern zu können, welcher Mechanismus ferner umfasst:
eine Montageeinheit, auf der ein End-Wirkorgan oder ein Tisch montiert werden kann, die derart auf dem beweglichen Teil (3) angeordnet ist, dass sich die Montageeinheit um eine Achse drehen kann, und
einen Motor (10), der auf dem beweglichen Teil (3) zum Steuern des Drehantriebs und/oder der Drehposition der Montageeinheit relativ zu dem beweglichen Teil (3) vorgesehen ist,
**dadurch gekennzeichnet, dass** die Montageeinheit einen Drehantriebs-Ausgangs-Flansch (8) umfasst, der in sich ein Montageloch hat, wobei der Flansch (8) zu seiner Drehung durch den Motor (10) angetrieben wird, der an dem beweglichen Teil (3) angebracht ist, und der Flansch (8) im wesentlichen bündig mit der Oberfläche des beweglichen Teils (3) angeordnet ist.

2. Parallelgelenk-Mechanismus nach Anspruch 1, wobei der Flansch (8) auf einer Ausgangswelle eines Geschwindigkeits-Reduktionsmittels vorgesehen ist, das durch den Motor (10) zu seiner Drehung angetrieben wird.

3. Parallelgelenk-Mechanismus nach Anspruch 2, wobei der Flansch (8) auf der Ausgangswelle gebildet ist.

4. Parallelgelenk-Mechanismus nach Anspruch 1, 2 oder 3, wobei die Montageeinheit in Form des beweglichen Teils (3) ferner einen Spannmechanismus umfasst, der in dem Flansch (8) angeordnet ist.

5. Parallelgelenk-Mechanismus nach Anspruch 4, wobei der Spannmechanismus dazu bestimmt ist, eine Welle zu halten, die auf der Unterseite eines Gehäuses eines Werkzeugs, das ein End-Wirkorgan ausmacht, oder auf der unteren Oberfläche eines Tisches vorgesehen ist.

6. Parallelgelenk-Mechanismus nach einem der vorhergehenden Ansprüche, wobei sechs der nebeneinander angeordneten Verbindungsglieder (4a - 4f) vorgesehen sind.

7. Parallelgelenk-Mechanismus nach einem der vorhergehenden Ansprüche, wobei der Motor (10) ein Servomotor ist.

## Revendications

1. Un mécanisme à barres parallèles, lequel présente un élément fixe (2) et un élément mobile (3) et est disposé de manière que les deux éléments (2,3) soient couplés l'un à l'autre au moyen d'une pluralité de barres juxtaposées (4a-4f), et ces barres (4a-4f) sont entraînables individuellement pour modifier la position et l'attitude de l'élément mobile (3) par rapport à l'élément fixe (2), le mécanisme comprenant en outre :
un ensemble de montage sur lequel peut être monté un effecteur d'extrémité ou une table, disposé sur l'élément mobile (3) de sorte que l'ensemble de montage peut tourner autour d'un axe ; et
un moteur (10) prévu sur l'élément mobile (3) pour commander l'entraînement en rotation et/ou la position en rotation de l'ensemble de montage par rapport à l'élément mobile (3) ;
**caractérisé en ce que** ledit ensemble de montage comprend une bride de sortie d'entraînement rotatif (8) ayant un trou de montage à l'intérieur, la bride (8) étant entraînée en rotation par le moteur (10) fixé à l'élément mobile (3), et la bride (8) étant située pratiquement de niveau avec la surface de l'élément mobile (3).

2. Le mécanisme à barres parallèles selon la revendication 1, dans lequel ladite bride (8) est prévue sur un arbre de sortie d'un réducteur de vitesse qui est entraîné en rotation par ledit moteur (10).

3. Le mécanisme à barres parallèles selon la revendication 2, dans lequel ladite bride (8) est formée sur ledit arbre de sortie.

4. Le mécanisme à barres parallèles selon la revendication 1, 2 ou 3, dans lequel ledit ensemble de montage (3) comprend en outre un mécanisme de serrage disposé dans la bride (8).

5. Le mécanisme à barres parallèles selon la revendication 4, dans lequel ledit mécanisme de serrage est adapté pour maintenir un arbre prévu sur le dessous d'un boîtier d'un outil constituant un effecteur d'extrémité, ou sur la surface inférieur d'une table.

6. Le mécanisme à barres parallèles selon une quelconque des revendications précédentes, dans lequel se trouvent six desdites barres juxtaposées (4a-4f).

7. Le mécanisme à barres parallèles selon une quelconque des revendications précédentes, dans lequel ledit moteur (10) est un servomoteur.
